# EUROPEAN PATENT SPECIFICATION

(11) **EP 1 421 126 B1**
(45) Date of publication and mention of the grant of the patent: **14.03.2007**
(21) Application number: 02754076.4
(22) Date of filing: 27.08.2002
(51) Int. Cl.: C08F 291/18, C08J 7/18, C08F 259/08, C08J 5/22, B01D 67/00

(54) **PROCESS FOR PREPARING GRAFT COPOLYMER MEMBRANES**
VERFAHREN ZUR HERSTELLUNG VON PFROPF-COPOLYMER MEMBRANEN
PROCEDE DE PREPARATION DE MEMBRANES DE COPOLYMERE GREFFE

(30) Priority: 27.08.2001 US 940690; 12.07.2002 US 395517 P
(43) Date of publication of application: 26.05.2004
(73) Proprietor: Ballard Power Systems Inc., Burnaby, BC V5J 5J8 (CA)
(72) Inventor: STONE, Charles, West Vancouver, British Columbia V7W 3H7 (CA)
(74) Representative: Beyer, Andreas
(86) International application number: PCT/CA2002/001319
(87) International publication number: WO 2003/018655

(56) References cited:
- WO-A-01/58576
- WO-A-99/24497
- US-A- 3 700 609
- US-A- 4 506 035
- US-A- 4 605 685

## Description

### BACKGROUND OF THE INVENTION

### Field of the Invention

The present invention relates to processes for preparing graft copolymer membranes by radiation induced graft polymerization of fluorostyrenic monomers, employing monomer emulsions.

### Description of the Related Art

The preparation of graft polymeric membranes by radiation induced graft polymerization of a monomer to a polymeric base film has been demonstrated for various combinations of monomers and base films. The grafting of styrene to a polymeric base film, and subsequent sulfonation of the grafted polystyrene chains has been used to prepare ion-exchange membranes.

U.S. Patent No. 4,012,303 reports the radiation induced graft polymerization of α,β,β-trifluorostyrene (TFS) to polymeric base films using gamma ray co-irradiation. The graft polymerization procedure may use TFS in bulk or in solution. The '303 patent reports that aromatic compounds or halogenated compounds are suitable solvents.

U.S. Patent No. 4,605,685 reports the graft polymerization of TFS to pre-irradiated polymeric base films. Solid or porous polymeric base films, such as for example polyethylene and polytetrafluoroethylene, are pre-irradiated and then contacted with TFS neat or dissolved in a solvent.

U.S. Patent No. 6,225,368 reports graft polymerization of unsaturated monomers to pre-irradiated polymeric base films employing an emulsion including the monomer, and emulsifier and water. In the method of the '368 patent, a base polymer is activated by irradiation, quenched so as to affect cross-linking of the polymer, and then activated again by irradiation. The activated, cross-linked polymer is then contacted with the emulsion. The '368 patent also states that the use of the disclosed method eliminates homopolymerization caused by irradiation of the monomer, and that this allows the use of high concentrations of monomers in the emulsion.

These methods of preparing graft polymeric membranes have several disadvantages.

With co-irradiation, since the TFS monomer is simultaneously irradiated, undesirable processes such as monomer dimerization and/or independent homopolymerization of the monomer may occur in competition with the desired graft polymerization reaction.

When neat TFS is employed in graft polymerization reactions, it can be difficult to achieve a contact time between the monomer and the irradiated base film that would be suitable for high-volume production.

Typically, the neat monomer does not wet the surface of the base film very effectively, and this can result in an undesirably low graft polymerization rate unless a prolonged contact time is employed. Further, the use of neat TFS may adversely increase the cost of the graft polymerization process, due to the excess of monomer that is required.

A disadvantage of graft polymerization reactions carried out using TFS solutions is the level of graft polymerization drops significantly as the concentration of monomer in the solution is lowered. Indeed, the '303 patent reports a significant decrease in percentage graft with decreasing TFS concentrations. The drop in percentage graft may be mitigated by increasing the radiation dosage and/or the grafting reaction temperature, but this necessarily increases the energy requirements of the graft polymerization process. Overall, the use of TFS in solution tends to undesirably increase the cost of the graft polymerization process.

Cross-linking the base polymer by irradiating and quenching it prior to grafting necessitates two separate irradiation steps. Quenching further involves heating the irradiated polymer and/or the addition of cross-linking agents. An obvious disadvantage to this process is that these steps add time and expense to the process and complicate the overall preparation of the graft polymeric membranes.

WO 99/24497 A1 discloses a method for preparing a graft copolymer membrane, wherein a polymeric base film is irradiated by gamma-rays, X-rays or electron beam and thereafter brought into contact with at least one monomer in the liquid phase either as a neat liquid or in a solution. The solvent may be selected to cause the solution to penetrate the base film and to cause it to swell. The monomer may be a α,β,β-trifluorostyrene monomer or a naphthyl monomer.

US 4,506,035 describes a method for preparing hydrophilic fluoropolymers for use as microporous diaphragms in electrochemical cells, wherein at least one functional monomer and at least one non-functional monomer are radiation co-grafted onto a fluoropolymeric diaphragm. According to US 4,506,035 the mixture of monomeric base materials has to be in a liquid form and, if necessary, a common solvent is used to prepare a solution. Commonly, one of the monomeric materials itself will provide the liquid phase dissolving the other monomeric material. Alternatively, the solvent used is one which will penetrate the substrate material and cause it so swell, thereby allowing the solution of monomers to be absorbed right through the substrate material. Preferred non-functional monomers are styrene and its halogenated derivatives, such as α,β,β-trifluorostyrene.

US 4,605,685 relates to a method for manufacturing polymeric membranes used in electrochemical cells, wherein an inactive polymer film is irradiated to form radicals on the film. Subsequently, a graft polymerization of α,β,β-trifluorostyrene is carried out on the irradiated film by dipping the film into the monomer which has or has not been dissolved in a solvent.

US 3,700,609 describes a method for manufacturing graft copolymers, wherein a polytetrafluoroethylen dispersion in water is mixed with styrene monomer purified by distillation.

### BRIEF SUMMARY OF THE INVENTION

A process for preparing a graft copolymer membrane is provided comprising exposing a polymeric base film to a dose of ionizing radiation, and then contacting the irradiated base film with an emulsion comprising a fluorostyrenic monomer.

In one embodiment, the present process for preparing a graft copolymer membrane comprises:
(a) exposing a polymeric base film to a dose of ionizing radiation; and
(b) contacting the irradiated base film with an emulsion comprising at least one fluorostyrenic monomer,
wherein the amount of monomer in the emulsion is less than or equal to 30% by volume.

In another embodiment, the present process for preparing a graft copolymer membrane comprises exposing a polymeric base film to a dose of ionizing radiation, and contacting the irradiated base film with an emulsion comprising at least one substituted α,β,β-trifluorostyrene monomer.

In another embodiment, the present process for preparing a graft copolymer membrane comprises exposing a polymeric base film to a dose of ionizing radiation, and contacting the polymeric base film with an emulsion comprising trifluoronaphthyl monomers.

### BRIEF DESCRIPTION OF THE DRAWINGS

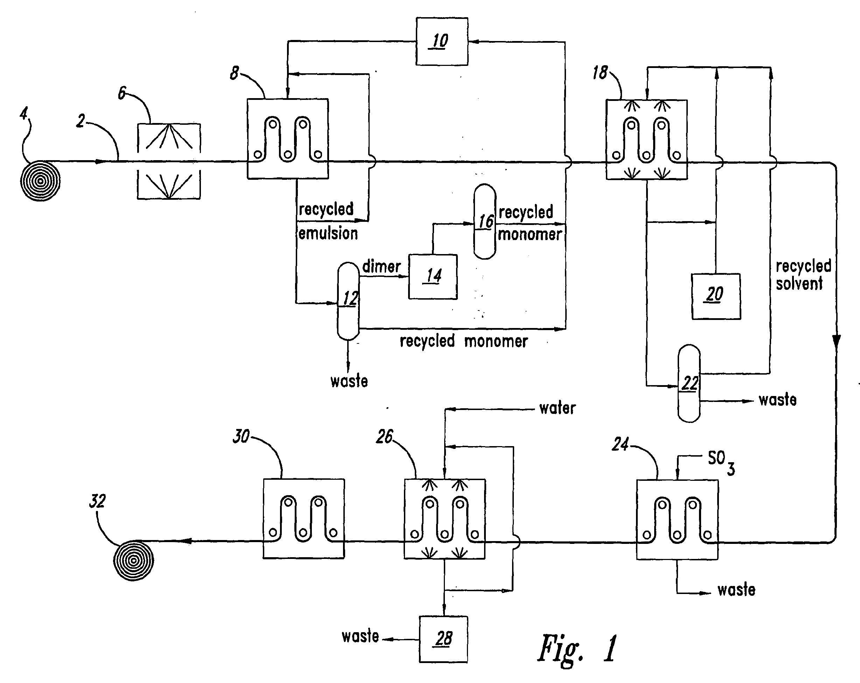

Figure 1 is a schematic representation of an embodiment of the present process.

### DETAILED DESCRIPTION OF INVENTION

In the present process, a graft copolymer membrane is prepared by exposing a polymeric base film to a dose of ionizing radiation, and then contacting the irradiated base film with an emulsion comprising a fluorostyrenic monomer.

Any radiation capable of introducing sufficient concentrations of free radical sites on and within the polymeric base film may be used in the preparation of the graft copolymer membranes described herein. For example, the irradiation may be by gamma rays, X-rays, electron beam, or high-energy UV radiation. The base film may be irradiated in an inert atmosphere. The radiation dose to which the base film is exposed may vary from 1-100 Mrad. Typically, the dose range is between 20-60 Mrad.

The polymeric base film may be dense or porous. Typically, the base film imparts mechanical strength to the membrane and should be physically and chemically stable to irradiation and the conditions to which it is to be exposed in the end-use application of the graft copolymer membrane. Suitable base films include homopolymers or copolymers of non-fluorinated, fluorinated and perfluorinated vinyl monomers. Fluorinated and perfluorinated polymers may be desired for certain applications due to their enhanced oxidative and thermal stability. Suitable base films include, but are not limited to, films comprising polyethylene, polypropylene, polyvinylidene fluoride, polytetrafluoroethylene, poly(ethylene-co-tetrafluoroethylene), poly(tetrafluoroethylene-co-perfluorovinylether), poly(tetrafluoroethylene-co-hexafluoropropylene), poly(vinylidene fluoride-co-hexafluoropropylene), poly(vinylidene fluoride-co-chtorotrifluoroethylene), and poly(ethylene-co-chlorotrifluoroethylene).

The irradiated base film is then contacted with the emulsion and monomer is then incorporated into the base film to form a graft copolymer. The irradiated base film may be contacted with the emulsion in an inert atmosphere, if desired. The emulsion may assist in wetting the irradiated base film with the monomer.

Suitable fluorostyrenic monomers include α-fluorostyrenes, α,β-difluorostyrenes, α,β,β-trifluorostyrenes, and the corresponding fluoronaphthylenes. Unsubstituted and substituted monomers, particularly para-substituted monomers, may be employed. Mixtures of fluorostyrenic monomers may also be employed in the emulsion, if desired.

As used herein and in the appended claims, a substituted fluorostyrenic monomer refers to monomers having substituents on the aromatic ring. Suitable substituted α,β,β-trifluorostyrenes and α,β,β-trifluoronaphthylenes are described in PCT Application No. PCT/CA98/01041, and PCT Application No. PCT/CA00/00337. Examples of such α,β,β-trifluorostyrenes include, but are not limited to, methyl-α,β,β-trifluorostyrene, methoxy-α,β,β-trifluorostyrene, thiomethyl-α,β,β-trifluorostyrene, and phenyl-α,β,β-trifluorostyrene.

The emulsion may further comprise other suitable non-fluorinated monomers, such as styrene, α-methylstyrene, and vinyl phosphonic acid, for example. Depending on the end-use application of the graft copolymer membrane, the incorporation of a proportion of such non-fluorinated monomers may reduce the cost of the membrane without unduly affecting performance.

The emulsion may be an aqueous system, *i.e.,* an emulsion comprising the monomer(s) and water. Alternatively, a non-aqueous emulsion may be employed, comprising the monomer(s) and an immiscible solvent. The solvent may be selected so as to facilitate swelling of the base film. As a further alternative, an aqueous emulsion may be used that also includes a solvent that facilitates swelling of the base film.

The emulsion may further comprise an emulsifier. Ionic and nonionic emulsifiers may be employed. Non-limiting examples of suitable emulsifiers include sodium lauryl sulfate and dodecylamine hydrochloride. Depending upon the type and concentration of mnnomer(s) employed in the emulsion, an emulsifier may increase the stability of the emulsion. The particular emulsifier, if it is employed, is not essential and persons skilled in the art can readily choose a suitable emulsifier for a given application.

If desired, the emulsion may also comprise an inhibitor to limit the amount of dimerization and/or homopolymerization of the monomer(s) that may occur in the emulsion during graft polymerization. Again, the choice of inhibitor is not essential to the present process and suitable inhibitors will be apparent to persons skilled in the art.

The graft polymerization reaction may be carried out at any suitable temperature. Higher temperatures may result in higher graft polymerization rates, but can also increase the rate of dimerization/homopolymerization of the monomer. Suitable temperature ranges will depend on such factors as the desired level of grafting of the base film, the graft polymerization rate as a function of temperature for the monomer(s) employed, and the rate of dimerization/homopolymerization of the monomer(s) as a function of temperature. For example, temperatures in the range of 20-100°C are suitable, with a range of 50-80°C being typical when employing α,β,β-trifluorostyrenic monomers. Persons skilled in the art can readily determine suitable temperature ranges for a given application of the present process.

The method by which the irradiated base film is contacted with the emulsion is not essential to the present process. For example, the irradiated base film may be soaked or dipped in an emulsion bath, or the emulsion could be coated as a layer onto the irradiated base film. Alternatively, the emulsion could be sprayed on, either as an emulsion or as components that form the emulsion *in situ.* As a further example, the emulsion could be contacted with the irradiated base film as a mist. A combination of any of the foregoing methods may also be employed.

After graft polymerization, the graft copolymer membrane may be washed in a suitable solvent. The choice of solvent is not essential to the present process. Generally, it should be a solvent for the monomer but not for the base film. Persons skilled in the art can readily determine suitable solvents for a particular application.

Ion exchange functionality may then be introduced (directly or indirectly) into the graft copolymer membrane by subsequent reactions, such as, halomethylation, sulfonation, phosphonation, amination, carboxylation, hydroxylation (optionally combined with subsequent phosphorylation) and nitration, for example, to produce an ion exchange membrane suitable for various applications. More than one ion exchange moiety may be introduced into the graft copolymer membrane. Sulfonation or phosphonation, in particular, may be employed where the graft copolymer membrane is intended as an ion exchange membrane for use in fuel cell applications.

The particular method of introducing ion exchange functionality into the grafted film is not essential to the present process, nor is the selection of the particular reagent. For example, where a sulfonated graft copolymer membrane is desired, liquid or vapor phase sulfonation may be employed, using sulfonating agents such as sulfur trioxide, chlorosulfonic acid (neat or in solution), and oleum; with chlorosulfonic acid a subsequent hydrolysis step may be required.

Figure 1 is a schematic representation of an embodiment of the present process. For the purpose of illustration, graft polymerization and sulfonation of a dense polymeric base film is described. Polymeric base film 2 is fed from roller station 4 to irradiation chamber 6, where it is exposed to a dose of ionizing radiation in an inert atmosphere. The irradiated base film then moves to grafting chamber 8 where it is exposed to an emulsion comprising a fluorostyrenic monomer. The monomer is then incorporated into the base film to form a graft copolymer.

The emulsion is formed in supply 10 and supplied to grafting chamber 8. Excess emulsion may then be recycled to grafting chamber 8, as illustrated. As mentioned previously, the monomer(s) may dimerize instead of forming a graft copolymer with the irradiated base film. When the concentration of dimer in the emulsion increases, the excess emulsion may be directed to separator 12, which separates monomer and dimer present in the emulsion. The recycled monomer may then be directed to supply 10 for re-use in the emulsion. Dimer is directed to storage vessel 14. Once a sufficient amount of dimer is present in storage vessel 14, it is then directed to reactor 16 where it is cracked to form monomer, which may then be directed to supply 10 for re-use in the emulsion. Such a monomer recovery and recycle system is not required for the present process, but may increase the efficiency of monomer utilization and help to reduce cost.

Irradiated base film 2 may exposed to the emulsion by known methods, as mentioned previously. For example, grafting chamber 8 may comprise an emulsion bath or a spray booth. Where a porous base film is employed, it may immersed in an emulsion bath to imbibe the emulsion into the interior, and then sprayed with the emulsion, as well.

Where an emulsion bath is employed, means for agitating the emulsion may be employed, if desired. Conventional means for agitating the emulsion include stirring, sparging and ultrasonicating. Agitating may assist in maintaining the homogeneity of the emulsion.

Graft copolymer membrane 2 is then supplied to wash station 18 where it is washed in a suitable solvent. Solvent is provided to wash station 18 from solvent supply 20. Waste material may be separated from the solvent in separator 22 and the solvent recycled, as illustrated. Graft copolymer membrane 2 is then supplied to sulfonation chamber 24 and sulfonated therein.

As with the monomer recovery and recycle system discussed above, the illustrated solvent recycle system described in Figure 1 is not required for the present process, but may increase the efficiency of solvent utilization in the graft polymerization process and help to reduce the cost and/or reduce the environmental impact of process waste streams.

In the illustrated embodiment, graft copolymer membrane 2 is sulfonated by sulfur trioxide vapor. If desired, graft copolymer membrane 2 could be sulfonated at elevated pressure and/or temperature to enhance the rate of sulfonation. The sulfur trioxide may be diluted with an inert gas, such as nitrogen, to reduce its activity, as well. If desired, graft copolymer membrane 2 could be pre-soaked in a solvent to swell it, thereby facilitating sulfonation of the interior of the membrane. Suitable solvents include halogenated solvents such as 1,2-dichloroethane and 1,1,2,2-tetrachloroethane, for example. However, other sulfonation reagents and/or conditions may be employed in the present process, as discussed above.

Of course, other ion exchange functionality could be introduced into graft copolymer membrane 2, such as those discussed above.

Sulfonated membrane 2 is then directed to water wash station 26. The wash water is recovered and recycled, and waste is collected in vessel 28 for disposal, as illustrated.

Sulfonated membrane 2 is then dried in station 30 before being collected at roller station 32.

### EXAMPLE 1

### EMULSION GRAFT POLYMERIZATION OF PARA-METHYL -α,β,β-TRIFLUOROSTYRENE (P-ME-TFS) TO POLYVINYLIDENE FLUORIDE (TEDLAR^{®} SP) FILM

Four samples of 25 µm thick polyvinylidene fluoride (Tediar^{®} SP) film (7 cm x 7 cm) were irradiated with a dose of 20 Mrad using a 10 MeV ion beam radiation source, in an inert atmosphere with dry ice cooling. A 30% (v/v) emulsion was prepared by adding neat, degassed *p*-Me-TFS and dodecylamine hydrochloride to water (DDA.HCl; 0.050 g/ml water). Two irradiated base film samples were then immersed in the emulsion at 80°C for 2-3 hours, in an inert atmosphere. The other two samples were exposed to neat, degassed *p*-Me-TFS under the same reaction conditions. The *p*-Me-TFS grafted films were then washed twice with acetone and once with toluene before being dried at 45°C in a vacuum (3.9 kPa) for 3 hours. The percentage graft polymerization for each sample was then determined by calculating the percentage increase in mass of the grafted film relative to the mass of the base film.

The reaction conditions and percentage graft polymerization for each sample is summarized in Table 1.

**Table 1**

| Emulsion graft polymerization of *p*-Me-TFS | | | |
|---|---|---|---|
| to polyvinylidene fluoride film | | | |
| Sample | Emulsion or Neat | Time (h) | % Graft |
| 1 | neat | 2 | 71.8 |
| 2 | emulsion | 2 | 93.5 |
| 3 | neat | 3 | 77.6 |
| 4 | emulsion | 3 | 104.2 |

### EXAMPLE 2

### EMULSION GRAFT POLYMERIZATION OF p-ME-TFS TO POLY(ETHYLENE-CO-CHLOROTRIFLUOROETHYLENE) (HALAR^{®}) FILM

7 cm x 7 cm samples of poly(ethylene-co-chlorotrifluoroethylene) (Halar^{®}) film were prepared from 25 µm and 50 µm thick Halar^{®} 300LC and Halar^{®} MBF (porous film; 630 µm thick, 204 g/m²). The samples were irradiated with a dose of 10-40 Mrad using a 10 MeV ion beam radiation source. Samples 5-20 were irradiated in an inert atmosphere with dry ice cooling. An emulsion was prepared as described in Example 1. Half the samples were then immersed in the emulsion at 60-80°C for 24 hours, in an inert atmosphere. The remaining half of the samples were exposed to neat, degassed *p*-Me-TFS under the same reaction conditions. The *p*-Me-TFS grafted films were then washed twice with acetone and once with toluene before being dried at 45°C in a vacuum (3.9 kPa) for 3 hours. The percentage graft polymerization for each sample was then determined as described in Example 1.

The reaction conditions and percentage graft polymerization for each sample is summarized in Table 2.

**Table 2**

| Emulsion graft polymerization of *p*-Me-TFS to | | | | | | |
|---|---|---|---|---|---|---|
| poly(ethylene-co-chlorotrifluoroethylene) film | | | | | | |
| Sample | Dense or porous | Thickness (µm) | Dose (Mrad) | Emulsion or Neat | Temperature (°C) | % Graft |
| 5 | dense | 25 | 10 | neat | 60 | 48.0 |
| 6 | dense | 25 | 10 | emulsion | 60 | 80.8 |
| 7 | dense | 25 | 20 | neat | 60 | 58.5 |
| 8 | dense | 25 | 20 | emulsion | 60 | 88.6 |
| 9 | dense | 25 | 40 | neat | 60 | 62.1 |
| 10 | dense | 25 | 40 | emulsion | 60 | 105.5 |
| 11 | dense | 25 | 10 | neat | 70 | 44.9 |
| 12 | dense | 25 | 10 | emulsion | 70 | 64.9 |
| 13 | dense | 25 | 20 | neat | 70 | 50.6 |
| 14 | dense | 25 | 20 | emulsion | 70 | 88.7 |
| 15 | dense | 25 | 10 | neat | 80 | 19.6 |
| 16 | dense | 25 | 10 | emulsion | 80 | 56.8 |
| 17 | dense | 50 | 20 | neat | 60 | 56.0 |
| 18 | dense | 50 | 20 | emulsion | 60 | 98.2 |
| 19 | porous | 630 | 20 | neat | 60 | 40.8 |
| 20 | porous | 630 | 20 | emulsion | 60 | 68.9 |

### EXAMPLE 3

### EMULSION GRAFT POLYMERIZATION OF p-ME-TFS TO POLY(ETHYLENE-CO-TETRAFLUOROETHYLENE) (TEFZEL^{®}) FILM

Samples of 2 mil (approximately 50 µm) thick poly(ethylene-co-tetrafluoroethylene) (Tefzel^{®}) film (7 cm x 7 cm) were irradiated with a dose of 20 Mrad using a 10 MeV ion beam radiation source, in an inert atmosphere with dry ice cooling. Emulsions were prepared by adding neat, degassed *p*-Me-TFS and dodecylamine hydrochloride (DDA.HCl) to water at varying concentrations. Two irradiated base film samples were then immersed in a given emulsion at 80°C for 2 hours, in an inert atmosphere. In addition, sample 53 was exposed to neat, degassed *p*-Me-TFS under the same reaction conditions. The *p*-Me-TFS grafted films were then washed twice with acetone and once with toluene before being dried at 45°C in a vacuum (3.9 kPa) for 3 hours. The percentage graft polymerization for each sample was then determined as described in Example 1.

The reaction conditions, emulsion composition and percentage graft polymerization for each sample tested is summarized in Table 3.

**Table 3**

| Emulsion graft polymerization of *p*-Me-TFS to | | | | |
|---|---|---|---|---|
| poly(ethylene-co-tetrafluoroethylene) film | | | | |
| Sample | % Monomer (by weight) | DDA.HCl concentration (g/ml water) | % Graft | Average % Graft |
| 21 | 10 | 0.006 | 34.5 | 33.7 |
| 22 | 10 | 0.006 | 32.9 | |
| 23 | 30 | 0.006 | 47.7 | 48.2 |
| 24 | 30 | 0.006 | 48.7 | |
| 25 | 50 | 0.006 | 50.8 | 50.2 |
| 26 | 50 | 0.006 | 49.7 | |
| 27 | 70 | 0.006 | 51.5 | 51.4 |
| 28 | 70 | 0.006 | 51.3 | |
| 29 | 10 | 0.050 | 59.8 | 61.0 |
| 30 | 10 | 0.050 | 62.2 | |
| 31 | 30 | 0.050 | 59.9 | 58.6 |
| 32 | 30 | 0.050 | 57.3 | |
| 33 | 50 | 0.050 | 56.1 | 56.3 |
| 34 | 50 | 0.050 | 56.5 | |
| 35 | 70 | 0.050 | 52.5 | 52.2 |
| 36 | 70 | 0.050 | 51.8 | |
| 37 | 10 | 0.100 | 63.0 | 62.9 |
| 38 | 10 | 0.100 | 62.7 | |
| 39 | 30 | 0.100 | 58.5 | 58.2 |
| 40 | 30 | 0.100 | 57.9 | |
| 41 | 50 | 0.100 | 55.7 | 55.3 |
| 42 | 50 | 0.100 | 54.8 | |
| 43 | 70 | 0.100 | 51.3 | 51.2 |
| 44 | 70 | 0.100 | 51.1 | |
| 45 | 10 | 0.170 | 58.7 | 56.4 |
| 46 | 10 | 0.170 | 54.1 | |
| 47 | 30 | 0.170 | 54.0 | 54.7 |
| 48 | 30 | 0.170 | 55.4 | |
| 49 | 50 | 0.170 | 53.1 | 52.9 |
| 50 | 50 | 0.170 | 52.7 | |
| 51 | 70 | 0.170 | 49.4 | 49.0 |
| 52 | 70 | 0.170 | 48.6 | |
| 53 | 100 (neat) | - | 36.2 | 36.2 |

As shown in Tables 1-3, with the exception of samples 21 and 22, the emulsion graft polymerized samples exhibited higher graft polymerization rates relative to the comparative examples using the neat monomer under otherwise identical reaction conditions. Thus, the present process can achieve higher graft polymerization rates using less monomer than can be achieved when employing neat monomer under similar reaction conditions.

Also note that, with the exception of samples 21-28, there is a trend of increasing percentage graft polymerization with lower concentration of the monomer in the emulsion (see Table 4). Indeed, the highest percentage grafts for samples 29-52 were achieved using an emulsion having 10% monomer. This result for the emulsion graft polymerization process is surprising, since graft polymerization using TFS in solution yields lower percentage grafts with decreasing monomer concentration.

### EXAMPLE 4

### SULFONATION OF POLY(ETHYLENE-CO-TETRAFLUOROETHYLENE)-G-P-ME-TFS

Samples 29 and 30 of Example 3 were sulfonated as follows. Each sample was immersed in a sulfonation solution (30% SO₃ in dichloroethane, with 5% w/w acetic acid) for 2 hr at 50 °C. The EW of the sulfonated samples was determined, as was the amount of water present in the samples. From this data the percentage sulfonation of the samples was determined. Percentage sulfonation is measured as the percentage of available sites on the graft copolymer that are sulfonated, assuming one sulfonate group per site. The sulfonation results are summarized in Table 4.

**Table 4**

| Sulfonation of poly(ethylene-co-tetrafluoroethylene)-g-*p*-Me-TFS | | | | |
|---|---|---|---|---|
| Sample | % Graft | EW (g/mol) | Water content (wt. %) | % Sulfonation |
| 29 | 59.8 | 591 | 35.3 | 94.1 |
| 30 | 62.2 | 574 | 37.7 | 95.1 |

The present process provides for the preparation of graft copolymer membranes from fluorostyrenic monomers that is straightforward and makes efficient use of the monomers. The ability to use lower concentrations of monomer than is currently employed in solution or emulsion graft polymerization of fluorostyrenic monomers, while achieved comparable or superior graft polymerization rates, allows for considerable cost savings in membrane production, particularly in high-volume, continuous production.

All of the above U.S. patents, U.S. patent application publications, U.S. patent applications, foreign patents, foreign patent applications and, non-patent publications referred to in this specification and/or listed in the Application Data Sheet, are incorporated herein by reference in their entirety.

While particular elements, embodiments and applications of the present invention have been shown and described, it will be understood, of course, that the invention is not limited thereto since modifications may be made by those skilled in the art, particularly in light of the foregoing teachings. It is therefore contemplated by the appended claims to cover such modifications that incorporate those features coming within the scope of the invention.

## Claims

1. A process for preparing a graft copolymer membrane, the process comprising:
(a) exposing a polymeric base film to a dose of ionizing radiation; and
(b) contacting the irradiated base film with an emulsion comprising at least one fluorostyrenic monomer,
wherein the amount of monomer in the emulsion is less than or equal to 30% by volume.

2. The process of claim 1 wherein at least one of steps (a) and (b) are performed in an inert atmosphere.

3. The process of claim 1 wherein the base film comprises a fluorinated polymer.

4. The process of claim 1 wherein the base film comprises a polymer selected from the group consisting of polyvinylidene fluoride, poly(tetrafluoroethylene-co-perfluorovinylether), poly(tetrafluoroethylene-co-hexafluoropropylene), poly(ethylene-co-chlorotrifluoroethylene), polyethylene, polypropylene, poly(ethylene-co-tetrafluoroethylene), poly(vinylidene fluoride-co-hexafluoropropylene), poly(vinylidenefluoride-co-chlorotrifluoroethylene), and polytetrafluoroethylene.

5. The process of claim 1 wherein the base film comprises polyvinylidene fluoride.

6. The process of claim 1 wherein the base film comprises poly(ethylene-co-chlorotrifluoroethylene).

7. The process of claim 1 wherein the base film comprises ultra-high molecular weight polyethylene.

8. The process of claim 1 wherein the dose of ionizing radiation is in the range of about 1 Mrad to about 100 Mrad.

9. The process of claim 1 wherein the dose of ionizing radiation is in the range of about 20 Mrad to about 60 Mrad.

10. The process of claim 1 wherein the emulsion is an aqueous emulsion.

11. The process of claim 1 wherein the emulsion further comprises a solvent that aids in swelling of the base film.

12. The process of claim 1 wherein the at least one fluorostyrenic monomer comprises a substituted α,β,β-trifluorostyrene.

13. The process of claim 1 wherein the at least one fluorostyrenic monomer is selected from the group consisting of methyl-α,β,β-trifluorostyrenes, methoxy-α,β,β-trifluorostyrenes, thiomethyl-α,β,β-trifluorostyrenes, phenyl-α,β,β-trlfluorostyrenes, and mixtures thereof.

14. The process of claim 1 wherein the at least one fluorostyrenic monomer comprises para-methyl-α,β,β-trifluorostyrene.

15. The process of claim 1 wherein the at least one fluorostyrenic monomer is selected from the group consisting of substituted and unsubstituted α-fluorostyrenes, α,β-difluorostyrenes, and α,β,β-trifluorostyrenes, and mixtures thereof.

16. The process of claim 1 wherein the emulsion further comprises at least one monomer selected from the group consisting of styrene, α-methylstyrene and vinyl phosphonic acid.

17. The process of claim 1 wherein the emulsion further comprises an emulsifier.

18. The process of claim 17 wherein the emulsifier comprises dodecylamine hydrochloride or sodium lauryl sulfate.

19. The process of claim 1 wherein the emulsion further comprises an inhibitor.

20. The process of claim 1 wherein the irradiated base film is contacted with the emulsion at a temperature of about 20°C to about 100°C.

21. The process of claim 1 wherein the irradiated base film is contacted with the emulsion at a temperature of about 50°C to about 80°C.

22. The process of claim 1 wherein the irradiated base film is sprayed with the emulsion.

23. The process of claim 1 wherein the amount of monomer in the emulsion is less than or equal to 10% by volume.

24. The process of claim 1, further comprising introducing ion exchange functionality into the graft copolymer membrane.

25. The process of claim 24, further comprising treating the graft copolymer membrane by a reaction selected from the group consisting of halomethylation, sulfonation, phosphonation, amination, carboxylation, hydroxylation and nitration.

26. The process of claim 1, further comprising sulfonating or phosphonating the graft copolymer membrane.

27. The process of claim 1, further comprising sulfonating the graft copolymer membrane by swelling the graft copolymer membrane in a halogenated solvent and exposing the swollen membrane to sulfur trioxide vapor.

28. A process for preparing a graft copolymer membrane, the process comprising:
(a) exposing a polymeric base film to a dose of ionizing radiation; and
(b) contacting the irradiated base film with an emulsion comprising at least one substituted α,β,β-trifluorostyrene monomer or trifluoronaphthyl monomers.

29. The process of claim 28 wherein at least one of steps (a) and (b) are performed in an inert atmosphere.

30. The process of claim 28 wherein the base film comprises a fluorinated polymer.

31. The process of claim 28 wherein the base film comprises polyvinylidene fluoride.

32. The process of claim 28 wherein the base film comprises poly(ethylene-co-chlorotrifiuoroethylene).

33. The process of claim 28 wherein the base film comprises ultra-high molecular weight polyethylene.

34. The process of claim 28 wherein the dose of ionizing radiation is in the range of about 1 Mrad to about 100 Mrad.

35. The process of claim 28 wherein the emulsion is an aqueous emulsion.

36. The process of claim 28 wherein the at least one substituted α,β,β-trifluorostyrene monomer is selected from the group consisting of methyl-α,β,β-trifluorostyrenes, methoxy-α,β,β-trifluorostyrenes, thiomethyl-α,β,β-trlfluorostyrenes, phenyl-α,β,β-trifluorostyrenes, and mixtures thereof.

37. The process of claim 28 wherein the at least one substituted α,β,β-trifluorostyrene monomer comprises para-methyl-α,β,β-trifluorostyrene.

38. The process of claim 28 wherein the emulsion further comprises at least one monomer selected from the group consisting of styrene, α-fluorostyrene, α,β-difluorostyrene, α-methylstyrene, vinyl phosphonic acid, and mixtures thereof.

39. The process of claim 28 wherein the emulsion further comprises an emulsifier.

40. The process of claim 28 wherein the emulsion further comprises an inhibitor.

41. The process of claim 28 wherein the irradiated base film is contacted with the emulsion at a temperature of about 20°C to about 100°C.

42. The process of claim 28 wherein the amount of monomer in the emulsion is less than or equal to 30% by volume.

43. The process of claim 28, further comprising treating the graft copolymer membrane by a reaction selected from the group consisting of halomethylation, sulfonation, phosphonation, amination, carboxylation, hydroxylation and nitration.

44. The process of claim 28, further comprising sulfonating or phosphonating the graft copolymer membrane.

45. The process of claim 28, further comprising sulfonating the graft copolymer membrane by exposing it to sulfur trioxide vapor.

## Patentansprüche

1. Verfahren zur Herstellung einer Pfropf-Copolymer-Membran, wobei das Verfahren umfasst:
(a) Einwirkenlassen einer Dosis ionisierender Strahlung auf eine polymere Basisschicht; und
(b) In-Kontakt-Bringen der bestrahlten Basisschicht mit einer Emulsion, die mindestens ein fluorstyrolisches Monomer umfasst,
wobei die Monomermenge in der Emulsion weniger als oder gleich 30 Vol.-% beträgt.

2. Verfahren nach Anspruch 1, bei dem mindestens einer der Schritte (a) und (b) in einer Inertatmosphäre durchgeführt wird.

3. Verfahren nach Anspruch 1, bei dem die Basisschicht ein fluoriertes Polymer umfasst.

4. Verfahren nach Anspruch 1, bei dem die Basisschicht ein Polymer umfasst, das ausgewählt ist aus der Gruppe bestehend aus Polyvinylidenfluorid, Poly(tetrafluorethylen-co-perfluorvinylether), Poly(tetrafluorethylen-co-hexafluorpropylen), Poly(ethylen-co-chlortrifluorethylen), Polyethylen, Polypropylen, Poly(ethylen-co-tetrafluorethylen), Poly(vinylidenfluorid-co-hexafluorpropylen), Poly(vinylidenfluorid-co-chlortrifluorethylen) und Polytetrafluorethylen.

5. Verfahren nach Anspruch 1, bei dem die Basisschicht Polyvinylidenfluorid umfasst.

6. Verfahren nach Anspruch 1, bei dem die Basisschicht Poly(ethylen-co-chlortrifluorethylen) umfasst.

7. Verfahren nach Anspruch 1, bei dem die Basisschicht Polyethylen mit ultrahohem Molekulargewicht umfasst.

8. Verfahren nach Anspruch 1, bei dem die Dosis ionisierender Strahlung im Bereich von etwa 1 MRad bis etwa 100 MRad liegt.

9. Verfahren nach Anspruch 1, bei dem die Dosis ionisierender Strahlung im Bereich von etwa 20 MRad bis etwa 60 MRad liegt.

10. Verfahren nach Anspruch 1, bei dem die Emulsion eine wässrige Emulsion ist.

11. Verfahren nach Anspruch 1, bei dem die Emulsion ferner ein Lösungsmittel umfasst, das das Quellen der Basisschicht unterstützt.

12. Verfahren nach Anspruch 1, bei dem das mindestens eine fluorstyrolische Monomer ein substituiertes α,β,β-Trifluorstyrol umfasst.

13. Verfahren nach Anspruch 1, bei dem das mindestens eine fluorstyrolische Monomer ausgewählt ist aus der Gruppe bestehend aus Methyl-α,β,β-trifluorstyrolen, Methoxy-α,β,β-trifluorstyrolen, Thiomethyl-α,β,β-trifluorstyrolen, Phenyl-α,β,β-trifluorstyrolen und deren Mischungen.

14. Verfahren nach Anspruch 1, bei dem das mindestens eine fluorstyrolische Monomer para-Methyl-α,β,β-trifluorstyrol umfasst.

15. Verfahren nach Anspruch 1, bei dem das mindestens eine fluorstyrolische Monomer ausgewählt ist aus der Gruppe bestehend aus substituierten und unsubstituierten α-Fluorstyrolen, α,β-Difluorstyrolen und α,β,β-Trifluorstyrolen und deren Mischungen.

16. Verfahren nach Anspruch 1, bei dem die Emulsion ferner mindestens ein Monomer umfasst, das ausgewählt ist aus der Gruppe bestehend aus Styrol, α-Methylstyrol und Vinylphosphonsäure.

17. Verfahren nach Anspruch 1, bei dem die Emulsion ferner einen Emulgator umfasst.

18. Verfahren nach Anspruch 17, bei dem der Emulgator Dodecylaminhydrochlorid oder Natriumlaurylsulfat umfasst.

19. Verfahren nach Anspruch 1, bei dem die Emulsion ferner einen Inhibitor umfasst.

20. Verfahren nach Anspruch 1, bei dem die bestrahlte Basisschicht mit der Emulsion bei einer Temperatur von etwa 20°C bis etwa 100°C in Kontakt gebracht wird.

21. Verfahren nach Anspruch 1, bei dem die bestrahlte Basisschicht mit der Emulsion bei einer Temperatur von etwa 50°C bis etwa 80°C in Kontakt gebracht wird.

22. Verfahren nach Anspruch 1, bei dem die bestrahlte Basisschicht mit der Emulsion besprüht wird.

23. Verfahren nach Anspruch 1, bei dem die Monomermenge in der Emulsion weniger als oder gleich 10 Vol.-% beträgt.

24. Verfahren nach Anspruch 1, weiter umfassend das Einführen einer Ionenaustausch-Funktionalität in die Pfropf-Copolymer-Membran.

25. Verfahren nach Anspruch 24, weiter umfassend das Behandeln der Pfropf-Copolymer-Membran durch eine Reaktion, die ausgewählt ist aus der Gruppe bestehend aus Halogenmethylierung, Sulfonierung, Phosphonierung, Aminierung, Carboxylierung, Hydroxylierung und Nitrierung.

26. Verfahren nach Anspruch 1, weiter umfassend die Sulfonierung oder Phosphonierung der Pfropf-Copolymer-Membran.

27. Verfahren nach Anspruch 1, weiter umfassend die Sulfonierung der Propf-Copolymer-Membran durch Quellen der Pfropf-Copolymer-Membran in einem halogenierten Lösungsmittel und Einwirkenlassen von Schwefeltrioxid-Dampf auf die gequollene Membran.

28. Verfahren zur Herstellung einer Propf-Copolymer-Membran, wobei das Verfahren umfasst:
(a) Einwirkenlassen einer Dosis ionisierender Strahlung auf eine polymere Basisschicht; und
(b) In-Kontakt-Bringen der bestrahlten Basisschicht mit einer Emulsion, die mindestens ein substituiertes α,β,β-Trifluorstyrol-Monomer oder Trifluornaphthyl-Monomere umfasst.

29. Verfahren nach Anspruch 28, bei dem mindestens einer der Schritte (a) und (b) in einer Inertatmosphäre durchgeführt wird.

30. Verfahren nach Anspruch 28, bei dem die Basisschicht ein fluoriertes Polymer umfasst.

31. Verfahren nach Anspruch 28, bei dem die Basisschicht Polyvinylidenfluorid umfasst.

32. Verfahren nach Anspruch 28, bei dem die Basisschicht Poly(ethylen-co-chlortrifluorethylen) umfasst.

33. Verfahren nach Anspruch 28, bei dem die Basisschicht Polyethylen mit ultrahohem Molekulargewicht umfasst.

34. Verfahren nach Anspruch 28, bei dem die Dosis ionisierender Strahlung im Bereich von etwa 1 MRad bis etwa 100 MRad liegt.

35. Verfahren nach Anspruch 28, bei dem die Emulsion eine wässrige Emulsion ist.

36. Verfahren nach Anspruch 28, bei dem das mindestens eine substituierte α,β,β-Trifluorstyrol-Monomer ausgewählt ist aus der Gruppe bestehend aus Methyl-α,β,β-trifluorstyrolen, Methoxy-α,β,β-trifluorstyrolen, Thiomethyl-α,β,β-trifluorstyrolen, Phenyl-α,β,β-trifluorstyrolen und deren Mischungen.

37. Verfahren nach Anspruch 28, bei dem das mindestens eine substituierte α,β,β-Trifluorstyrol-Monomer para-Methyl-α,β,β-trifluorstyrol umfasst.

38. Verfahren nach Anspruch 28, bei dem die Emulsion ferner mindestens ein Monomer umfasst, das ausgewählt ist aus der Gruppe bestehend aus Styrol, α-Fluorstyrol, α,β-Difluorstyrol, α-Methylstyrol, Vinylphosphonsäure und deren Mischungen.

39. Verfahren nach Anspruch 28, bei dem die Emulsion ferner einen Emulgator umfasst.

40. Verfahren nach Anspruch 28, bei dem die Emulsion ferner einen Inhibitor umfasst.

41. Verfahren nach Anspruch 28, bei dem die bestrahlte Basisschicht mit der Emulsion bei einer Temperatur von etwa 20°C bis etwa 100°C in Kontakt gebracht wird.

42. Verfahren nach Anspruch 28, bei dem die Monomermenge in der Emulsion weniger als oder gleich 30 Vol-% beträgt.

43. Verfahren nach Anspruch 28, weiter umfassend die Behandlung der Pfropf-Copolymer-Membran durch eine Reaktion, die ausgewählt ist aus der Gruppe bestehend aus Halogenmethylierung, Sulfonierung, Phosphonierung, Aminierung, Carboxylierung, Hydroxylierung und Nitrierung.

44. Verfahren nach Anspruch 28, weiter umfassend das Sulfonieren oder Phosphonieren der Pfropf-Copolymer-Membran.

45. Verfahren nach Anspruch 28, weiter umfassend das Sulfonieren der Pfropf-Copolymer-Membran, indem sie Schwefeltrioxid-Dampf ausgesetzt wird.

## Revendications

1. Procédé de préparation d'une membrane de copolymère greffé, le procédé comprenant :
(a) l'exposition d'un film polymère de base à une dose de rayonnement ionisant ; et
(b) la mise en contact du film de base irradié avec une émulsion comprenant au moins un monomère fluorostyrénique,
dans lequel la quantité de monomère dans l'émulsion est inférieure ou égale à 30 % en volume.

2. Procédé selon la revendication 1, dans lequel l'une au moins des étapes (a) et (b) est réalisée dans une atmosphère inerte.

3. Procédé selon la revendication 1, dans lequel le film de base comprend un polymère fluoré.

4. Procédé selon la revendication 1, dans lequel le film de base comprend un polymère choisi dans le groupe constitué par le poly(fluorure de vinylidène), un copolymère tétrafluoroéthylène-perfluorovinyléther, un copolymère tétrafluoroéthylène-hexafluoropropylène, un copolymère éthylène-chlorotrifluoroéthylène, le polyéthylène, le polypropylène, un copolymère éthylène-tétrafluoroéthylène, un copolymère fluorure de vinylidène-hexafluoropropylène, un copolymère fluorure de vinylidène-chlorotrifluoroéthylène et le polytétrafluoroéthylène.

5. Procédé selon la revendication 1, dans lequel le film de base comprend du poly(fluorure de vinylidène).

6. Procédé selon la revendication 1, dans lequel le film de base comprend un copolymère éthylène-chlorotrifluoroéthylène.

7. Procédé selon la revendication 1, dans lequel le film de base comprend un polyéthylène de masse moléculaire extrêmement élevée.

8. Procédé selon la revendication 1, dans lequel la dose de rayonnement ionisant est dans la plage d'environ 1 Mrad à environ 100 Mrad.

9. Procédé selon la revendication 1, dans lequel la dose de rayonnement ionisant est dans la plage d'environ 20 Mrad à environ 60 Mrad.

10. Procédé selon la revendication 1, dans lequel l'émulsion est une émulsion aqueuse.

11. Procédé selon la revendication 1, dans lequel l'émulsion comprend en outre un solvant qui facilite la dilatation du film de base.

12. Procédé selon la revendication 1, dans lequel le au moins un monomère fluorostyrénique comprend un α,β,β-trifluorostyrène substitué.

13. Procédé selon la revendication 1, dans lequel le au moins un monomère fluorostyrénique est choisi dans le groupe constitué par les méthyl-α,β,β-trifluorostyrènes, les méthoxy-α,β,β-trifluorostyrènes, les thiométhyl-α,β,β-trifluorostyrènes, les phényl-α,β,β-trifluorostyrènes, et les mélanges de ceux-ci.

14. Procédé selon la revendication 1, dans lequel le au moins un monomère fluorostyrénique comprend du para-méthyl-α,β,β-trifluorostyrène.

15. Procédé selon la revendication 1, dans lequel le au moins un monomère fluorostyrénique est choisi dans le groupe constitué par les α-fluorostyrènes, les α,β-difluorostyrènes et les α,β,β-trifluorostyrènes, substitués et non substitués, et les mélanges de ceux-ci.

16. Procédé selon la revendication 1, dans lequel l'émulsion comprend en outre au moins un monomère choisi dans le groupe constitué par le styrène, l'α-méthylstyrène et l'acide vinylphosphonique.

17. Procédé selon la revendication 1, dans lequel l'émulsion comprend en outre un émulsifiant.

18. Procédé selon la revendication 17, dans lequel l'émulsifiant comprend le chlorhydrate de dodécylamine ou le laurylsulfate de sodium.

19. Procédé selon la revendication 1, dans lequel l'émulsion comprend en outre un inhibiteur.

20. Procédé selon la revendication 1, dans lequel le film de base irradié est mis en contact avec l'émulsion à une température d'environ 20 °C à environ 100 °C.

21. Procédé selon la revendication 1, dans lequel le film de base irradié est mis en contact avec l'émulsion à une température d'environ 50 °C à environ 80 °C.

22. Procédé selon la revendication 1, dans lequel le film de base irradié est pulvérisé avec l'émulsion.

23. Procédé selon la revendication 1, dans lequel la quantité de monomère dans l'émulsion est inférieure ou égale à 10 % en volume.

24. Procédé selon la revendication 1, comprenant en outre l'introduction d'une fonctionnalité d'échange d'ions dans la membrane de copolymère greffé.

25. Procédé selon la revendication 24, comprenant en outre le traitement de la membrane de copolymère greffé par une réaction choisie dans le groupe constitué par un halogénométhylation, une sulfonation, une phosphonation, une amination, une carboxylation, une hydroxylation et une nitration.

26. Procédé selon la revendication 1, comprenant en outre une sulfonation ou une phosphonation de la membrane de copolymère greffé.

27. Procédé selon la revendication 1, comprenant en outre une sulfonation de la membrane de copolymère greffé par dilatation de la membrane de copolymère greffé dans un solvant halogéné et par exposition de la membrane dilatée à une vapeur de trioxyde de soufre.

28. Procédé de préparation d'une membrane de copolymère greffé, le procédé comprenant :
(a) l'exposition d'un film polymère de base à une dose de rayonnement ionisant ; et
(b) la mise en contact du film de base irradié avec une émulsion comprenant au moins un monomère α,β,β-trifluorostyrène substitué ou des monomères trifluoronaphtyle.

29. Procédé selon la revendication 28, dans lequel l'une au moins des étapes (a) et (b) est réalisée dans une atmosphère inerte.

30. Procédé selon la revendication 28, dans lequel le film de base comprend un polymère fluoré.

31. Procédé selon la revendication 28, dans lequel le film de base comprend du poly(fluorure de vinylidène).

32. Procédé selon la revendication 28, dans lequel le film de base comprend un copolymère éthylène-chlorotrifluoroéthylène.

33. Procédé selon la revendication 28, dans lequel le film de base comprend un polyéthylène de masse moléculaire extrêmement élevée.

34. Procédé selon la revendication 28, dans lequel la dose de rayonnement ionisant est dans la plage d'environ 1 Mrad à environ 100 Mrad.

35. Procédé selon la revendication 28, dans lequel l'émulsion est une émulsion aqueuse.

36. Procédé selon la revendication 28, dans lequel le au moins un monomère α,β,β-trifluorostyrène substitué est choisi dans le groupe constitué par les méthyl-α,β,β-trifluorostyrènes, les méthoxy-α,β,β-trifluorostyrènes, les thiométhyl-α,β,β-trifluorostyrènes, les phényl-α,β,β-trifluorostyrènes, et les mélanges de ceux-ci.

37. Procédé selon la revendication 28, dans lequel le au moins un monomère α,β,β-trifluorostyrène substitué comprend du para-méthyl-α,β,β-trifluorostyrène.

38. Procédé selon la revendication 28, dans lequel l'émulsion comprend en outre au moins un monomère choisi dans le groupe constitué par le styrène, l'α-fluorostyrène, l'α,β-difluorostyrène, l'α-méthylstyrène, l'acide vinylphosphonique, et les mélanges de ceux-ci.

39. Procédé selon la revendication 28, dans lequel l'émulsion comprend en outre un émulsifiant.

40. Procédé selon la revendication 28, dans lequel l'émulsifiant comprend en outre un inhibiteur.

41. Procédé selon la revendication 28, dans lequel le film de base irradié est mis en contact avec l'émulsion à une température d'environ 20 °C à environ 100 °C.

42. Procédé selon la revendication 28, dans lequel la quantité de monomère dans l'émulsion est inférieure ou égale à 30 % en volume.

43. Procédé selon la revendication 28, comprenant en outre le traitement de la membrane de copolymère greffé par une réaction choisie dans le groupe constitué par un halogénométhylation, une sulfonation, une phosphonation, une amination, une carboxylation, une hydroxylation et une nitration.

44. Procédé selon la revendication 28, comprenant en outre une sulfonation ou une phosphonation de la membrane de copolymère greffé.

45. Procédé selon la revendication 28, comprenant en outre une sulfonation de la membrane de copolymère greffé par exposition de celle-ci à une vapeur de trioxyde de soufre.
